# EUROPÄISCHE PATENTSCHRIFT

(11) **EP 4 249 782 B1**
(45) Veröffentlichungstag und Bekanntmachung des Hinweises auf die Patenterteilung: **29.01.2025**
(21) Anmeldenummer: 23162794.4
(22) Anmeldetag: 20.03.2023
(51) Int. Cl.: F16L 3/10, F16L 55/035

(54) **SCHALLDÄMMEINLAGE AUS EINEM DÄMMMATERIAL FÜR EINE ROHRSCHELLE UND ROHRSCHELLE, DIE EINE DERARTIGE SCHALLDÄMMEINLAGE UMFASST**
SOUND INSULATION INSERT MADE OF AN INSULATING MATERIAL FOR A PIPE CLIP AND PIPE CLIP COMPRISING SUCH A SOUND INSULATION INSERT
PIÈCE D'INSONORISATION EN MATÉRIAU ISOLANT POUR COLLIER DE SERRAGE ET COLLIER DE SERRAGE COMPRENANT UNE TELLE PIÈCE D'INSONORISATION

(30) Priorität: 22.03.2022 DE 202022101477 U
(43) Veröffentlichungstag der Anmeldung: 27.09.2023
(73) Patentinhaber: REHAU Industries SE & Co. KG, 95111 Rehau (DE)
(72) Erfinder: Hennauer, René, 90427 Nürnberg (DE); Zipf, Christian, 91056 Erlangen (DE)

(56) Entgegenhaltungen:
- DE-A1- 19 516 202
- DE-A1- 19 922 022
- DE-U1- 8 910 177

## Beschreibung

Die vorliegende Erfindung betrifft Schalldämmeinlage aus einem Dämmmaterial für eine Rohrschelle mit mindestens einem Schellenbügel, wobei die Schalldämmeinlage im Querschnitt einen Aufnahmebereich zur zumindest teilweisen Aufnahme des mindestens einen Schellenbügels und eine Anlagebereich zur Anlage der Schalldämmeinlage an einem in die Rohrschelle aufgenommenen Leitungselement umfasst. Darüber hinaus bezieht sich die vorliegende Erfindung auf eine Rohrschelle, die mindestens einen Schellenbügel und mindestens eine derartige Schalldämmeinlage umfasst, wobei der Schellenbügel zumindest teilweise im Aufnahmebereich der Schalldämmeinlage aufgenommen ist.

Derartige Schalldämmeinlagen und diese umfassende Rohrschellen sind aus dem Stand der Technik bekannt. Die Rohrschellen werden zur Befestigung und Halterung von Leitungselementen, beispielsweise von Rohren, aber auch von Kabeln, an einem Baukörper, beispielsweise an einer Decke oder einer Wand eines Gebäudes eingesetzt. Die Schalldämmeinlagen solcher Rohrschellen bestehen häufig aus einem elastischen Material und sind an der dem Leitungselement zugewandten Seite des Schellenbügels angeordnet. Auf diese Weise dienen sie zur Körperschallentkopplung zwischen dem Leitungselement und dem Baukörper. Eine derartige Rohrschelle und eine zugehörige Schalldämmeinlage sind beispielsweise aus der EP 3 196 527 A1 bekannt. Zur Verbesserung der Körperschallentkopplung zwischen dem von der Rohrschelle umschlossenen Leitungselement und dem Baukörper weist die Schalldämmeinlage zum Leitungselement gerichtete Oberfläche sich in Längsrichtung der Schalldämmeinlage erstreckende Rillen auf.

Eine Schalldämmeinlage mit den Merkmalen des Oberbegriffs des Anspruchs 1 ist aus der DE 199 02 022 A1 bekannt. Weitere Schalldämmeinlagen sind in der DE 89 10 177 U1 und der DE 195 16 202 A1 beschrieben.

Nachteilig an der in der EP 3 196 527 A1 beschriebenen Rohrschelle wird gesehen, dass nur ein geringer Kraftaufwand dazu erforderlich ist, dass Leitungselement aus der Rohrschelle herauszuziehen. Dadurch besteht die Gefahr, dass sich das Leitungselement während des Betriebs aus der Rohrschelle löst und es dadurch zu einem Wasserschaden kommt.

An dieser Stelle setzt die vorliegende Erfindung ein, der die Aufgabe zugrunde liegt, eine Schalldämmeinlage zur Verfügung zu stellen, die die Nachteile des Stands der Technik zumindest teilweise überwindet. Insbesondere soll es die erfindungsgemäße Schalldämmeinlage ermöglichen, bei hoher Körperschalldämmung ein geringes Risiko eines Wasserschadens zu bieten. Darüber hinaus liegt die vorliegende Erfindung in der Bereitstellung einer Rohrschelle, die eine derartige Schalldämmeinlage umfasst.

Diese und andere Aufgaben werden durch eine Schalldämmeinlage mit den Merkmalen des Anspruchs 1 bzw. durch eine Rohrschelle mit den Merkmalen des Anspruchs 6 gelöst. Bevorzugte Ausführungsformen der erfindungsgemäßen Schalldämmeinlage bzw. der erfindungsgemäßen Rohrschelle sind in den abhängigen Ansprüchen beschrieben.

Gemäß der vorliegenden Erfindung wurde erkannt, dass der für die Körperschalldämmung zwischen dem Leitungselement und dem Baukörper erforderliche Hohlraum sich nicht zwischen dem Leitungselement und der Schalldämmeinlage befinden muss, sondern auch im Inneren der Schalldämmeinlage angeordnet sein kann. Dadurch ist es möglich, die zum Leitungselement gerichtete Oberfläche der Schalldämmeinlage im Wesentlichen eben auszubilden. Dadurch liegt die Schalldämmeinlage mit einem größeren Anteil ihrer Oberfläche an dem in die Rohrschelle aufgenommenen Leitungselement an, was zu einer hohen Auszugskraft führt, die aufgebracht werden muss, um das Leitungselement aus der Rohrschelle herauszuziehen. Dadurch ist die Gefahr eines Wasserschadens erheblich reduziert.

Dementsprechend stellt die vorliegende Erfindung eine Schalldämmeinlage aus einem Dämmmaterial für eine Rohrschelle mit mindestens einem Schellenbügel, wobei die Schalldämmeinlage im Querschnitt einen Aufnahmebereich zur zumindest teilweisen Aufnahme des mindestens einen Schellenbügels und einen Anlagebereich zur Anlage der Schalldämmeinlage an einem in die Rohrschelle aufgenommenen Leitungselement umfasst, zur Verfügung, wobei sie mindestens einen sich in Längsrichtung der Schalldämmeinlage erstreckenden Hohlraum umfasst und die Schalldämmeinlage im Querschnitt aus einem Zentralbereich, der den Aufnahmebereich und den Anlagebereich umfasst, und mindestens einem Lateralbereich aufgebaut ist, wobei sich die Schalldämmeinlage erfindungsgemäß dadurch auszeichnet, dass der mindestens eine Lateralbereich aus einem im Vergleich zum Zentralbereich weicheren Material ausgebildet ist. Darüber hinaus stellt die vorliegende Erfindung eine Rohrschelle zur Verfügung, die mindestens einen Schellenbügel und mindestens eine erfindungsgemäße Schalldämmeinlage umfasst, wobei der mindestens eine Schellenbügel zumindest teilweise im Aufnahmebereich in die Schalldämmeinlage aufgenommen ist.

In Bezug auf die erfindungsgemäße Schalldämmeinlage kann es von Vorteil sein, wenn diese mehr als einen sich in Längsrichtung der Schalldämmeinlage erstreckenden Hohlraum, insbesondere zwei, drei, vier, fünf, sechs, sieben, acht usw. sich in Längsrichtung der Schalldämmeinlage erstreckende Hohlräume umfasst. Es hat sich gezeigt, dass mit einer wachsenden Anzahl derartiger Hohlräume die Körperschalldämmungeigenschaften der erfindungsgemäßen Schalldämmeinlage weiter verbessert werden.

Zusätzlich oder alternativ dazu kann es hilfreich sein, wenn die nach außen gerichtete gegenüberliegende Oberfläche des Anlagebereichs im Wesentlichen eben ausgebildet ist. Wenn der Anlagebereich eben an der Oberfläche eines in die erfindungsgemäße Rohrschelle aufgenommenen Leitungselements, insbesondere eines Rohrs anliegt, ist die Auszugskraft hoch. Dadurch ist die Gefahr des Herauslösens des Leitungselements aus der erfindungsgemäßen Rohrschelle gering und die damit einhergehende Wahrscheinlichkeit eines Wasserschadens ebenfalls.

Wie hierin verwendet bedeutet der Begriff "im Wesentlichen eben" in Bezug auf eine Oberfläche, dass die entsprechende Oberfläche keine Unebenheiten, wie beispielsweise Rillen, Riefen, Lamellen oder dergleichen, umfasst, die über Ungenauigkeiten bei der Herstellung der erfindungsgemäßen Schalldämmeinlage hinausgehen. Darüber hinaus können in Randbereichen der Oberfläche gegebenenfalls Krümmungen vorhanden sein, die einen glatten Übergang zu anderen Bereichen der erfindungsgemäßen Schalldämmeinlage gewährleisten.

Es kann auch von Vorteil sein, wenn es sich bei dem Dämmmaterial der Schalldämmeinlage um ein elastisches Material, insbesondere um ein thermoplastisches Elastomer (TPE), handelt. Dabei sind thermoplastische Elastomere auf Basis von PVC (Polyvinylchlorid), PP/EPDM (Polypropylen/Ethylen-Propylen-Dien-(Monomer)-Kautschuk) sowie TPS (Compounds auf Basis von SBS oder SEBS), SBS (Styrol-Butadien-Blockcopolymere) und SEBS (Styrol-Ethylen-Butadien-Blockcopolymere) besonders bevorzugt.

Erfindungsgemäß ist die Schalldämmeinlage im Querschnitt aus einem Zentralbereich, der den Aufnahmebereich und den Anlagebereich umfasst, und mindestens einem Lateralbereich aufgebaut ist. Eine derartige Aufteilung der Schalldämmeinlage in Zentralbereich und Lateralbereich(e) ermöglicht es, die Materialien der einzelnen Bereiche spezifisch auf die jeweiligen Anforderungen anzupassen. Vorzugsweise weist die erfindungsgemäße Schalldämmeinlage zwei Lateralbereiche auf. Die beiden Lateralbereiche sind bevorzugt an zwei einander gegenüberliegenden Seiten des Zentralbereichs angeordnet.

In Bezug auf die für die erfindungsgemäße Schalldämmeinlage eingesetzten Materialien ist der/die mindestens eine Lateralbereich(e) erfindungsgemäß aus einem im Vergleich zum Zentralbereich weicheren Material ausgebildet. In bevorzugten Ausführungsformen weist das thermoplastische Material des Zentralbereichs eine Shore-Härte (Shore A) im Bereich von 35 Shore A bis 65 Shore A, insbesondere im Bereich von 40 Shore A bis 60 Shore A und ganz besonders bevorzugt) im Bereich von 45 Shore A bis 55 Shore A auf. Besonders bevorzugt weist das thermoplastische Material des Zentralbereichs eine Shore-Härte (Shore A) von etwa 50 Shore A auf. Die Härte des Materials des Lateralbereichs liegt vorzugsweise im Bereich von 10 Shore A bis 30 Shore A und insbesondere im Bereich von 15 Shore A bis 26 Shore A. In besonders bevorzugten Ausführungsformen weist das thermoplastische Material des Lateralbereichs eine Shore-Härte (Shore A) von etwa 21 Shore A auf. Die angegeben Werte der Shore-Härte (Shore A) beziehen sich jeweils dabei auf die Norm DIN ISO 53505 (2000-08).

Es kann auch günstig sein, wenn der mindestens eine Lateralbereich mindestens einen Lateralbereichshohlraum aufweist. Auf diese Weise können die Körperschalldämmeigenschaften der erfindungsgemäßen Schalldämmeinlage weiter verbessert werden. Der mindestens eine Lateralbereichshohlraum erstreckt sich vorzugsweise ebenfalls in Längsrichtung der erfindungsgemäßen Schalldämmeinlage.

Die in Bezug auf die erfindungsgemäße Schalldämmeinlage erläuterten vorteilhaften Merkmale und Eigenschaften gelten für die erfindungsgemäße Rohrschelle entsprechend.

Zusätzlich kann es in Bezug auf die erfindungsgemäße Rohrschelle bevorzugt sein, wenn die Rohrschelle weiter mindestens ein Schließelement zum Verschließen des mindestens einen Schellenbügels und/oder mindestens ein Befestigungselement zum Befestigen der Rohrschelle an einem Baukörper umfasst. Als Schließelement kommt vorzugsweise ein Schnellspannverschluss in Betracht, mit dem der Schellenbügel um das in die erfindungsgemäße Rohrschelle aufgenommene Leitungselement herum gespannt werden kann. Im geschlossenen Zustand des Schließelements liegt die nach außen gerichtete Oberfläche des Anlagebereichs der erfindungsgemäßen Schalldämmeinlage vorzugsweise flächig an dem Leitungselement an. Als Befestigungselement kann beispielsweise ein Innengewinde, insbesondere eine Innengewindemutter, mit dem Schellenbügel verbunden sein. Über einen in das Innengewinde eingedrehten Gewindestift kann die erfindungsgemäße Rohrschelle an dem Bauelement, beispielsweise an einer Decke oder an einer Wand eines Gebäudes, befestigt werden.

Es kann auch günstig sein, wenn die erfindungsgemäße Rohrschelle als Mehrfachrohrschelle, insbesondere als Doppelrohrschelle, ausgebildet ist. Im Falle einer derartigen Mehrfachrohrschelle kann mindestens eine erfindungsgemäße Rohrschelle als Fixierschelle und gleichzeitig mindestens eine weitere erfindungsgemäße Rohrschelle als Stützstelle fungieren. Eine Fixierschelle dient zur Befestigung einer die erfindungsgemäße Rohrschelle umfassenden Rohranordnung an einem Bauelement, insbesondere an einer Decke oder an einer Wand eines Gebäudes. Eine Stützschelle stützt sich auf einer Fixierschelle ab, d. h. die Stützschelle liegt zumindest abschnittsweise an der vertikal darunter angeordneten Fixierschelle an, und stützt gleichzeitig die Rohranordnung, die das in die erfindungsgemäße Rohrschelle aufgenommene Leitungselement und die entsprechende Doppelrohrschelle umfasst. Dementsprechend kann es in diesem Zusammenhang bevorzugt sein, wenn die jeweilige Schalldämmeinlage von zwei benachbarten Rohrschellen zumindest abschnittsweise aneinander anliegen. Dadurch wird die Übertragung des durch ein durch das Leitungselement strömende Medium erzeugten Körperschalls weiter verringert.

In diesem Zusammenhang kann es besonders bevorzugt sein, wenn die Schalldämmeinlage von mindestens zwei benachbarten Rohrschellen zumindest abschnittsweise aneinander anliegen. Dies dient zur einer weiter reduzierten Übertragung von Körperschall.

Die erfindungsgemäße Schalldämmeinlage sowie die erfindungsgemäße Rohrschelle können auch zeilenweise oder schichtweise unter Verwendung eines zeilenaufbauenden oder schichtaufbauenden Fertigungsverfahrens (z. B. 3D-Druck) hergestellt werden. Bevorzugt wird die erfindungsgemäße Schalldämmeinlage jedoch mittels Extrusion hergestellt und in entsprechende Abschnitte abgelängt.

Im Folgenden soll die vorliegende Erfindung unter Bezugnahme auf die in den Figuren dargestellten Ausführungsformen im Detail erläutert werden. Dabei zeigen
- Figur 1: eine schematische Querschnittsdarstellung einer Schalldämmeinlage gemäß einer Ausführungsform der vorliegenden Erfindung;
- Figur 2: eine schematische Darstellung einer Ausführungsform der erfindungsgemäßen Rohrschelle, die die in Fig. 1 gezeigte Schalldämmeinlage umfasst; und
- Figur 3: eine schematische Darstellung einer weiteren Ausführungsform der erfindungsgemäßen Rohrschelle, die die in Fig. 1 gezeigte Schalldämmeinlage umfasst.

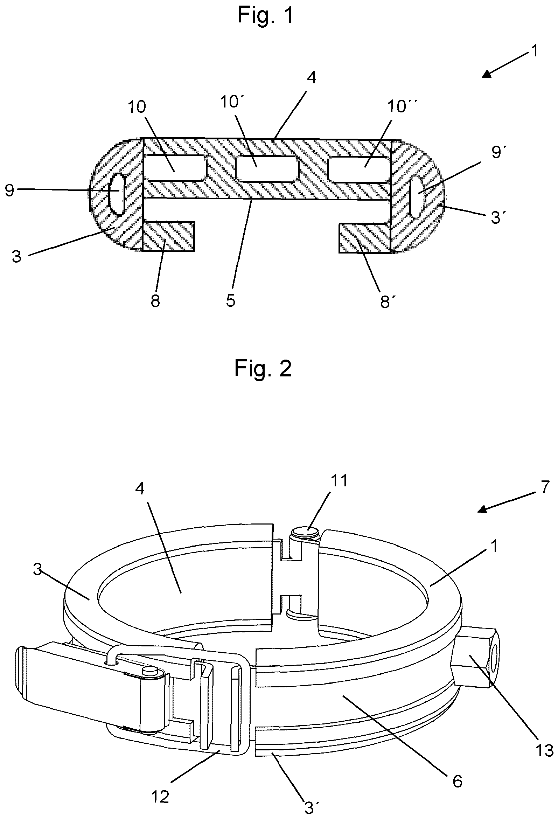

In Figur 1 ist eine Schalldämmeinlage 1 gemäß einer Ausführungsform der vorliegenden Erfindung in einer schematischen Querschnittsdarstellung gezeigt. Die erfindungsgemäße Schalldämmeinlage 1 umfasst einen zentral angeordneten Zentralbereich 2 und zwei Lateralbereiche 3, 3', die an zwei gegenüberliegenden Seiten des Zentralbereichs 2 angeordnet sind, vorzugsweise stoffschlüssig mit dem Zentralbereich 2 verbunden sind (beispielsweise durch Verschweißen, Verschmelzen oder Verkleben).

Die beiden freien Seiten des Zentralbereichs 2 fungieren als Anlagebereich 4 und als Aufnahmebereich 5 für einen Schellenbügel 6 (vgl. Fig. 2). Die Oberfläche des Anlagebereichs 4 ist im Wesentlichen eben ausgebildet. Damit liegt die Oberfläche des Anlagebereichs 4 flächig an der Außenoberfläche eines Leitungselements (nicht dargestellt), insbesondere eines Rohres, an, das in eine die erfindungsgemäße Schalldämmeinlage 1 umfassende Rohrschelle 7 (vgl. Fig. 2) aufgenommen ist. Der Aufnahmebereich 5 ist an der dem Anlagebereich 4 gegenüberliegenden Seite des Zentralbereichs 2 angeordnet. Die zur Außenseite gerichtete Oberfläche des Aufnahmebereichs 5 bildet zusammen mit freiliegenden Abschnitten der Lateralbereiche 3, 3' und zwei an den Lateralbereichen 3, 3' angeordneten Haltestegen 8, 8' einen Aufnahmeraum. In den Aufnahmeraum kann mindestens ein Schellenbügel 6 aufgenommen werden, der dann mit Ausnahme des Abstands zwischen den beiden Haltestegen 8, 8' im Querschnitt vollständig von der erfindungsgemäßen Schalldämmeinlage 1 umgeben ist, was für einen stabilen Sitz des mindestens einen Schellenbügel 6 in der erfindungsgemäßen Schalldämmeinlage 1 sorgt.

Der Zentralbereich 2 und die Lateralbereiche 3, 3' sind gemäß der in Fig. 1 gezeigten Ausführungsform der erfindungsgemäßen Schalldämmeinlage 1 aus einem thermoplastischen Elastomer (TPE), vorzugsweise PP/EPDM, hergestellt. Dabei sind die Lateralbereiche 3, 3' mit einer Shore-Härte (Shore A) von etwa 21 Shore A weicher ausgebildet als der Zentralbereich 2 mit einer Härte von etwa 50 Shore A. Die angegeben Werte der Shore-Härte (Shore A) beziehen sich dabei auf die Norm DIN ISO 53505 (2000-08). Dieser weiche Charakter der Lateralbereiche 3, 3' wird weiter durch zwei Lateralhohlräume 9, 9' gefördert, von denen sich jeweils einer in jedem der Lateralbereiche 3, 3' befindet. Durch den weichen Charakter der Lateralbereiche 3, 3' wird die Körperschalldämmung zwischen zwei aneinanderliegenden erfindungsgemäßen Rohrschellen 7, 7' (vgl. 3) erhöht.

Im Zentralbereich 2 der erfindungsgemäßen Schalldämmeinlage 1 befinden sich drei sich in Längsrichtung der Schalldämmeinlage 1 erstreckende Hohlräume 10, 10', 10". Diese Hohlräume 10, 10', 10" dienen zur Körperschallentkopplung zwischen dem am Anlagebereich 4 anliegenden Leitungselement und einem Bauelement, an dem die erfindungsgemäße Rohrschelle 7 befestigt ist. Durch die Hohlräume 10, 10', 10" und die beiden Lateralhohlräume 9, 9' ist die durch die erfindungsgemäße Schalldämmeinlage 1 bewirkte Körperschallentkopplung stark ausgeprägt, obwohl die erfindungsgemäße Schalldämmeinlage 1 flächig am Leitungselement anliegt.

Fig. 2 zeigt eine schematische Darstellung einer Rohrschelle 7, die als Einzelrohrschelle ausgebildet ist und die in Fig. 1 gezeigte erfindungsgemäße Schalldämmeinlage 1 umfasst. In Fig. 2 ist gut zu erkennen, dass der Schellenbügel 6 in den Aufnahmeraum der erfindungsgemäßen Schalldämmeinlage 1 aufgenommen ist. Dabei ist der Schellenbügel 6 zweiteilig ausgebildet, wobei die beiden Teile des Schellen 6 über ein Gelenkelement 11 verbunden sind. Im Bereich des Gelenkselements 11 ist die erfindungsgemäße Schalldämmeinlage 1 unterbrochen, sodass die beiden Teile des Schellenbügel 6 über das Gelenkselement 11 relativ zueinander beweglich sind.

An der dem Gelenkselement 11 gegenüberliegenden Seite der erfindungsgemäßen Rohrschelle 7 weist die Rohrschelle 7 ein Schließelement 12 auf. In der in Fig. 2 dargestellten Ausführungsform ist das Schließelement 12 bügelförmig ausgebildet, wobei der Bügel ein umgebogenes Ende des Schellenbügels 6 hintergreift. Das Schließelement 12 lässt sich mittels eines Hebels spannen, sodass der eben ausgebildete Anlagebereich 4 der erfindungsgemäßen Schalldämmeinlage 1 eines in die erfindungsgemäße Rohrschelle 7 eingelegten Leitungselements mit geeignetem Außendurchmesser flächig an der Außenoberfläche des Leitungselements anliegt.

Darüber hinaus umfasst die erfindungsgemäße Rohrschelle 7 ein mit dem Schellenbügel 6 verbundenes Befestigungselement 13. In der in Fig. 2 dargestellten Ausführungsform der erfindungsgemäßen Rohrschelle 7 ist das Befestigungselement 13 in Form einer Innengewindemutter ausgebildet. Über einen in das Innengewinde eingedrehten Gewindestift kann die erfindungsgemäße Rohrschelle an einem Bauelement, beispielsweise an einer Decke oder an einer Wand eines Gebäudes, befestigt werden.

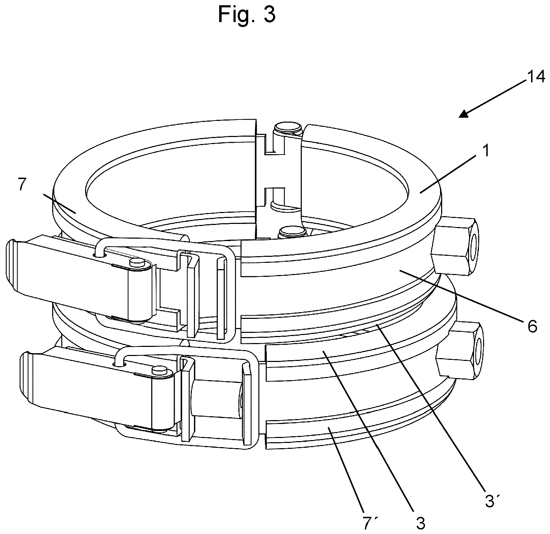

Letztlich zeigt Fig. 3 eine schematische Darstellung einer weiteren Ausführungsform der vorliegenden Erfindung in Form einer Doppelrohrschelle 14. In der in Fig. 3 gezeigten Ausführungsform umfasst die Doppelrohrschelle 14 zwei zueinander identische Rohrschellen 7, 7'. Dabei liegt der Lateralbereich 3' der in Fig. 3 oberen Rohrschelle 7 am Lateralbereich 3 der unteren Rohrschelle 7' an.

Die in Fig. 3 unten angeordnete Rohrschelle 7' fungiert in der Doppelrohrschelle 14 als Fixierschelle, über die eine die erfindungsgemäße Doppelrohrschelle 14 umfassende Rohranordnung an einem Bauelement, insbesondere an einer Decke oder an einer Wand eines Gebäudes, befestigt wird. Die in Fig. 3 oben angeordnete Rohrschelle 7 fungiert in der Doppelrohrschelle 14 dagegen als Stützschelle, die sich auf der unter ihr angeordneten Fixierschelle abstützt.

Die vorliegende Erfindung wurde exemplarisch unter Bezugnahme auf die in den Figuren dargestellten Ausführungsformen der vorliegenden Erfindung im Detail beschrieben. Es versteht sich, dass die vorliegende Erfindung nicht auf die in den Figuren dargestellte Ausführungsformen beschränkt ist. Vielmehr ergibt sich der Umfang der vorliegenden Erfindung aus den beigefügten Ansprüchen.

## Patentansprüche

1. Schalldämmeinlage (1) aus einem Dämmmaterial für eine Rohrschelle (7, 7') mit mindestens einem Schellenbügel (6), wobei die Schalldämmeinlage (1) im Querschnitt einen Aufnahmebereich (5) zur zumindest teilweisen Aufnahme des mindestens einen Schellenbügels (6) und einen Anlagebereich (4) zur Anlage der Schalldämmeinlage (1) an einem in die Rohrschelle (6) aufgenommenen Leitungselement umfasst, wobei die Schalldämmeinlage (1) mindestens einen sich in Längsrichtung der Schalldämmeinlage (1) erstreckenden Hohlraum (10, 10', 10") umfasst und die Schalldämmeinlage (1) im Querschnitt aus einem Zentralbereich (2), der den Aufnahmebereich (5) und den Anlagebereich (4) umfasst, und mindestens einem Lateralbereich (3, 3') aufgebaut ist,
**dadurch gekennzeichnet, dass**
der mindestens eine Lateralbereich (3, 3') aus einem im Vergleich zum Zentralbereich (2) weicheren Material ausgebildet ist.

2. Schalldämmeinlage (1) nach Anspruch 1, **dadurch gekennzeichnet, dass** die Schalldämmeinlage (1) mehr als einen sich in Längsrichtung der Schalldämmeinlage (1) erstreckenden Hohlraum (10, 10', 10") umfasst.

3. Schalldämmeinlage (1) nach Anspruch 1 oder Anspruch 2, **dadurch gekennzeichnet, dass** die nach außen gerichtete gegenüberliegende Oberfläche des Anlagebereichs (4) im Wesentlichen eben ausgebildet ist.

4. Schalldämmeinlage (1) nach einem der Ansprüche 1 bis 3, **dadurch gekennzeichnet, dass** es sich bei dem Dämmmaterial der Schalldämmeinlage (1) um ein elastisches Material, insbesondere um ein thermoplastisches Elastomer (TPE), handelt.

5. Schalldämmeinlage (1) nach einem der Ansprüche 1 bis 4, **dadurch gekennzeichnet, dass**. der mindestens einen Lateralbereich (3, 3') mindestens einen Lateralbereichshohlraum (9, 9') aufweist.

6. Rohrschelle (7, 7'), umfassend:
(a) mindestens einen Schellenbügel (6); und
(b) mindestens eine Schalldämmeinlage (1) nach einem der Ansprüche 1 bis 5, wobei der mindestens eine Schellenbügel (6) zumindest teilweise im Aufnahmebereich (5) in die Schalldämmeinlage (1) aufgenommen ist.

7. Rohrschelle (7, 7') nach Anspruch 6, **dadurch gekennzeichnet, dass** die Rohrschelle (7) weiter mindestens ein Schließelement (12) zum Verschließen des mindestens einen Schellenbügels (6) und/oder mindestens ein Befestigungselement (13) zum Befestigen der Rohrschelle (7, 7') an einem Baukörper umfasst.

8. Rohrschelle (7, 7') nach Anspruch 6 oder Anspruch 7, **dadurch gekennzeichnet, dass** die Rohrschelle (7, 7') als Mehrfachrohrschelle, insbesondere als Doppelrohrschelle (14), ausgebildet ist.

9. Rohrschelle (7, 7') nach Anspruch 8, **dadurch gekennzeichnet, dass** die Schalldämmeinlage (1) von mindestens zwei benachbarten Rohrschellen (7, 7') zumindest abschnittsweise aneinander anliegen.

## Claims

1. A sound insulation insert (1) made from an insulating material for a pipe clamp (7, 7') having at least one clamp bracket (6), wherein the sound insulation insert (1) in cross-section comprises a receiving region (5) for at least partly receiving the at least one clamp bracket (6) and a bearing region (4) for supporting the sound insulation insert (1) against a conduit element received in the pipe clamp (6), wherein the sound insulation insert (1) comprises at least one cavity (10, 10', 10") extending in the longitudinal direction of the sound insulation insert (1), and the sound insulation insert (1) in cross-section is constructed from a central region (2), which comprises the receiving region (5) and the bearing region (4), and at least one lateral region (3, 3'),
**characterised in that**
the at least one lateral region (3, 3') is formed from a material that is softer in comparison to the central region (2).

2. The sound insulation insert (1) according to claim 1, **characterised in that** the sound insulation insert (1) comprises more than one cavity (10, 10', 10") extending in the longitudinal direction of the sound insulation insert (1).

3. The sound insulation insert (1) according to claim 1 or claim 2, **characterised in that** the outwardly directed opposite surface of the bearing region (4) is largely flat.

4. The sound insulation insert (1) according to one of claims 1 to 3, **characterised in that** the insulating material of the sound insulation insert (1) is an elastic material, in particular a thermoplastic elastomer (TPE).

5. The sound insulation insert (1) according to one of claims 1 to 4, **characterised in that**
the at least one lateral region (3, 3') has at least one lateral region cavity (9, 9').

6. A pipe clamp (7, 7'), comprising:
(a) at least one clamp bracket (6); and
(b) at least one sound insulation insert (1) according to one of claims 1 to 5, wherein the at least one clamp bracket (6) is at least partly received into the sound insulation insert (1) in the receiving region (5).

7. The pipe clamp (7, 7') according to claim 6, **characterised in that** the pipe clamp (7) further comprises at least one closing element (12) for closing the at least one clamp bracket (6) and/or at least one fixing element (13) for fixing the pipe clamp (7, 7') to a structure.

8. The pipe clamp (7, 7') according to claim 6 or claim 7, **characterised in that** the pipe clamp (7, 7') is configured as a multiple pipe clamp, in particular as a double pipe clamp (14).

9. The pipe clamp (7, 7') according to claim 8, **characterised in that** at least portions of the sound insulation inserts (1) of at least two adjacent pipe clamps (7, 7') abut one another.

## Revendications

1. Insert d'insonorisation (1) en matériau isolant pour un collier de serrage (7, 7') avec au moins un étrier de collier (6), l'insert d'insonorisation (1) comprenant dans la section transversale une zone de réception (5) pour recevoir au moins partiellement l'au moins un étrier de collier (6) et une zone d'application (4) pour l'application de l'insert d'insonorisation (1) sur un élément de conduite reçu dans le collier de serrage (6), l'insert d'insonorisation (1) comprenant au moins une cavité (10, 10', 10") s'étendant dans la direction longitudinale de l'insert d'insonorisation (1) et l'insert d'insonorisation (1) étant composé, dans la section transversale, d'une zone centrale (2), qui comprend la zone de réception (5) et la zone d'appui (4), et d'au moins une zone latérale (3, 3'),
**caractérisé en ce que**
l'au moins une zone latérale (3, 3') est réalisée dans un matériau plus souple en comparaison de la zone centrale (2).

2. Insert d'insonorisation (1) selon la revendication 1, **caractérisé en ce que** l'insert d'insonorisation (1) comprend plus d'une cavité (10, 10', 10") s'étendant dans la direction longitudinale de l'insert d'insonorisation (1).

3. Insert d'insonorisation (1) selon la revendication 1 ou la revendication 2, **caractérisé en ce que** la surface opposée de la zone d'appui (4) orientée vers l'extérieur est réalisée sous forme essentiellement plane.

4. Insert d'insonorisation (1) selon l'une quelconque des revendications 1 à 3, **caractérisé en ce que** le matériau isolant de l'insert d'insonorisation (1) consiste en un matériau élastique, notamment un élastomère thermoplastique (TPE).

5. Insert d'insonorisation (1) selon l'une quelconque des revendications 1 à 4, **caractérisé en ce que** l'au moins une zone latérale (3, 3') présente au moins une cavité de zone latérale (9, 9').

6. Collier de serrage (7, 7'), comprenant :
(a) au moins un étrier de collier (6) ; et
(b) au moins un insert d'insonorisation (1) selon l'une quelconque des revendications 1 à 5,
dans lequel l'au moins un étrier de collier (6) est reçu au moins partiellement dans la zone de réception (5) dans l'insert d'insonorisation (1).

7. Collier de serrage (7, 7') selon la revendication 6, **caractérisé en ce que** le collier de serrage (7) comprend en outre au moins un élément de fermeture (12) pour fermer l'au moins un étrier de collier (6) et/ou au moins un élément de fixation (13) pour fixer le collier de serrage (7, 7') à un corps de construction.

8. Collier de serrage (7, 7') selon la revendication 6 ou la revendication 7, **caractérisé en ce que** le collier de serrage (7, 7') est réalisé sous forme de collier de serrage multiple, notamment sous forme de collier de serrage double (14).

9. Collier de serrage (7, 7') selon la revendication 8, **caractérisé en ce que** les inserts d'insonorisation (1) d'au moins deux colliers de serrage (7, 7') voisins s'appliquent l'un contre l'autre au moins par sections.
